# EUROPÄISCHE PATENTANMELDUNG

(11) **EP 4 711 751 A1**
(43) Veröffentlichungstag der Anmeldung: **18.03.2026**
(21) Anmeldenummer: 25198899.4
(22) Anmeldetag: 29.08.2025
(51) Int. Cl.: G01N 25/48

(54) **VERFAHREN UND VORRICHTUNG ZUM AUSWERTEN EINES MESSSIGNALS EINER THERMISCHEN ANALYSE, VERFAHREN UND EINE VORRICHTUNG ZUM GENERIEREN VON TRAININGSDATEN UND VERFAHREN UND VORRICHTUNG ZUM GENERIEREN VON TRAININGSDATEN FÜR EIN KÜNSTLICHES-INTELLIGENZ-MODUL**

(30) Priorität: 12.09.2024 DE 102024126299
(71) Anmelder: Netzsch-Gerätebau GmbH, 95100 Selb (DE)
(72) Erfinder: Dilsch, Nico, 95189 Höchstädt (DE); Strobel, Andreas, 08209 Auerbach (DE); Schöneich, Dr., Michael, 95100 Selb (DE); Hilpert, Dr., Thilo, 95100 Selb (DE); Wohlfahrt, Dr., Fabian, 95111 Rehau (DE); Brunner, Dr., Martin, 95176 Konradsreuth (DE); Schindler, Dr., Alexander, 95151 Leupoldsgrün (DE); Hachmann, Thorsten, 95100 Selb (DE); Denner, Dr., Thomas, 95100 Selb (DE); Dunkel, Johannes, 95111 Rehau (DE); Postel, Dr., Andreas, 95145 Oberkotzau (DE); Müller, Michael, 92724 Trabitz (DE)

(57) **Zusammenfassung**

Die Erfindung betrifft ein Verfahren und eine Vorrichtung (100) zum Auswerten eines Messsignals einer thermischen Analyse. Die Vorrichtung (100) weist eine Datenschnittstelle (110), die dazu eingerichtet ist, das Messsignal der thermischen Analyse zu empfangen, wobei das Messsignal eine auf einer Temperaturreihe basierende Messkurve angibt, und
eine Verarbeitungslogik (120) auf. Die Verarbeitungslogik (120) ist dazu eingerichtet, eine Anzahl von Schiebefenstern basierend auf dem Messsignal zu bestimmen, wobei jedes Schiebefenster einem entsprechenden Abschnitt der Messkurve mit einer Anzahl von Messpunkten zugeordnet ist, und durch ein von der Verarbeitungslogik ausgeführtes, zur Klassifikation eingerichtetes Künstliches-Intelligenz-Modul zu bestimmen, ob für das jeweilige aus der Anzahl von Schiebefenstern ein thermischer Effekt eines der thermischen Analyse zugrundeliegenden Proben-Materials gegeben ist, wobei das Künstliche-Intelligenz-Modul dazu eingerichtet ist, einen zusammenhängenden Abschnitt des thermischen Effekts bezogen auf die Messkurve zu bestimmen.

## Beschreibung

### GEBIET DER ERFINDUNG

Die vorliegende Erfindung betrifft das Gebiet der thermischen Analyse, insbesondere im Hinblick auf das Auswerten eines Messignals einer thermischen Analyse. Insbesondere betrifft die Erfindung ein Verfahren und eine Vorrichtung zum Auswerten eines Messsignals einer thermischen Analyse, ein Verfahren und eine Vorrichtung zum Generieren von Trainingsdaten für ein Künstliches-Intelligenz-Modul, ein entsprechendes computerlesbares Medium mit solchen Trainingsdaten, ein Computerprogramm und ein entsprechendes computerlesbares Medium.

### ALLGEMEINER STAND DER TECHNIK

Unter einer thermischen Analyse können verschiedene Methoden verstanden werden, bei denen physikalische und/oder chemische Eigenschaften einer Substanz, eines Substanzgemisches und/oder von Reaktionsgemischen als Funktion der Temperatur oder der Zeit gemessen werden, wobei die analysierte Probe einem definierten und/oder kontrollierten Temperaturprogramm unterworfen wird.

Eine thermoanalytische Methode ist beispielsweise die Dynamische Differenz-Kalorimetrie (englisch: differential scanning calorimetry, DSC), bei dem eine Differenz eines Wärmestroms eines Referenztiegels und eines Tiegels mit einem Probekörper als Funktion der Temperatur und/oder der Zeit gemessen wird. Nach Durchführung dieser Messung können anhand der Messdaten ein oder mehrere energetische Effekte ausgewertet werden, die sich in der Messung beispielsweise durch Auftreten eines Peaks, z.B. aufgrund von Schmelzen eines Materials, oder einer Stufe, z.B. beim Glasübergang, in der Messung bemerkbar machen.

Üblicherweise erfolgt das Auswerten einer solchen Messung auf energetische Effekte manuell. Beispielsweise gibt die Norm DIN EN ISO 11357-2, "Dynamische Differenzkalorimetrie (DSC)- Teil 2: Bestimmung der Glasübergangstemperatur und der Glasübergangsstufenhöhe" zur manuellen Bestimmung der Glasübergangstemperatur das Gleichflächenverfahren, das Wendepunktverfahren und das Halbstufenverfahren an. Zur manuellen Auswertung eines Peaks, der z.B. ein Schmelzen des Materials während des Aufheizens der Probe anzeigen kann, kann beispielsweise eine Fläche des Peaks bestimmt werden, wobei sich mittels dieser Fläche die Enthalpie des energetischen Effekts, also die in diesem Vorgang aufgenommene bzw. abgegebene Wärmemenge, bestimmen lässt.

Beispielsweise die EP 2 824 450 A1 beschäftigt sich mit der Automatisierung des Auswertens einer Messung der thermischen Analyse. Dabei wird unter Verwendung einer programmgesteuerten Rechnereinrichtung wenigstens eine Wahrscheinlichkeit der Übereinstimmung des Messergebnisses mit wenigstens einem vorab in der Rechnereinrichtung gespeicherten Datensatz berechnet. Diese Berechnung basiert auf einem Vergleich von zuvor aus einer Messkurve der thermischen Analyse extrahierten Effektdaten mit entsprechenden gespeicherten Effektdaten des Datensatzes. Demgegenüber wäre ein eher datengetriebener Ansatz für die Auswertung wünschenswert.

Die EP 4 209 781 A1 schlägt zur thermischen Analyse einer Substanzprobe, vor, erste Daten an ein erstes Softwaremodul bereitzustellen. Das erste Softwaremodul ist dazu eingerichtet, eine thermoanalytische Messkurve aus den ersten Daten zu berechnen, wobei die thermoanalytische Messkurve die Identifizierung des thermischen Effekts ermöglicht und zweite Daten ausgibt, die zur Darstellung der Messkurve geeignet sind, wobei das Verfahren ferner das Bereitstellen der zweiten Daten an ein zweites Softwaremodul umfasst, wobei das zweite Softwaremodul eine künstliche Intelligenz umfasst, die zur automatischen Identifizierung von thermischen Effekten eingerichtet ist. Das zweite Softwaremodul ist dazu eingerichtet, dritte Daten auszugeben, die für den thermischen Effekt repräsentativ sind, der automatisch durch die künstliche Intelligenz identifiziert wird. Die künstliche Intelligenz umfasst wenigstens ein neuronales Netz. Demgegenüber wäre ein alternativer Ansatz wünschenswert, der ohne eine neuronale Netzarchitektur auskommt.

### KURZDARSTELLUNG DER ERFINDUNG

Es ist eine Aufgabe der Erfindung, eine möglichst einfache Möglichkeit zum möglichst hoch automatisierten Auswerten eines Messsignals einer thermischen Analyse zu schaffen.

Diese Aufgabe wird mit den Gegenständen der unabhängigen Ansprüche gelöst. Vorteilhafte Weiterbildungen der Erfindung sind Gegenstand der abhängigen Ansprüche.

Gemäß einem ersten Aspekt wird ein Verfahren zum Auswerten eines Messsignals einer thermischen Analyse vorgeschlagen. Das Verfahren umfasst ein Empfangen des Messsignals der thermischen Analyse, wobei das Messsignal eine auf einer Temperaturreihe basierende Messkurve angibt. Zudem umfasst das Verfahren ein Bestimmen von einer Anzahl von Schiebefenstern basierend auf dem Messsignal, wobei jedes Schiebefenster einem entsprechenden Abschnitt der Messkurve mit einer Anzahl von Messpunkten zugeordnet ist. Des Weiteren umfasst das Verfahren ein Bestimmen, durch ein zur Klassifikation eingerichtetes Künstliches-Intelligenz-Modul, ob für das jeweilige aus der Anzahl von Schiebefenstern ein thermischer Effekt einer der thermischen Analyse zugrundeliegenden Probe gegeben ist, wobei das Künstliche-Intelligenz Modul einen zusammenhängenden Abschnitt des thermischen Effekts bezogen auf die Messkurve bestimmt.

Das vorgeschlagene Verfahren ermöglicht es mit technisch einfach zu implementierenden Mitteln, einen hohen Automatisierungsgrad beim Auswerten eines Messsignals einer thermischen Analyse zu erreichen. Das Verfahren erlaubt es, auf Basis des zur Klassifikation eingerichteten Künstlichen-Intelligenz-Moduls automatisiert die in der Messung bzw. Messkurve enthaltenen thermischen Effekte zuverlässig zu detektieren und deren Effektgrenzen möglichst genau zu bestimmen. Der Einsatz der Anzahl von Schiebefenstern erlaubt es, für die Klassifikation der einzelnen Messpunkte mehr als nur die Information eines einzelnen Messpunkts zu verwenden, wobei die Messkurve in einer Umgebung des zu klassifizierenden Messpunktes betrachtet wird. Gleichzeitig werden nicht die gesamte Messkurve, sondern nur einzelne Kurvenabschnitte und/oder Punkte klassifiziert, um den thermischen Effekt zu detektieren bzw. zu bestimmen. Die Auswertung des Messsignals kann mit dem darin detektierten thermischen Effekt als entsprechend generierte Daten bereitgestellt und/oder ausgegeben werden.

Die hierin beschriebenen Verfahren und Vorrichtungen können in zahlreichen technischen Anwendungen eingesetzt werden, wie beispielsweise in Laboranwendungen, in der Güterproduktion, in der Güterverarbeitung, oder dergleichen.

Das Verfahren kann von der hierin beschriebenen Vorrichtung oder allgemein von einer Rechnereinrichtung, einem Computer, einem Prozessor, einer CPU, oder dergleichen durchgeführt und/oder ausgeführt werden. Dementsprechend kann das Verfahren computerimplementiert sein. Das Verfahren kann beispielsweise als Computerprogramm, d.h. in Form von Computerbefehlen, implementiert sein. Das Messsignal kann in elektronischer, ggf. digitaler, Form vorliegen und empfangen werden. Das Ergebnis der Bestimmung durch das Künstliche-Intelligenz-Modul, d.h. der als Abschnitt bestimmte thermische Effekt, kann in Form von entsprechend generierten Ausgabedaten bereitgestellt und/oder ausgegeben werden. Das Ergebnis der Bestimmung kann beispielsweise in Textform, grafisch, usw. ausgegeben werden.

Wie hierin verwendet, können unter dem Oberbegriff "thermische Analyse", die auch als Thermoanalyse bezeichnet werden kann, verschiedene Methoden verstanden werden, bei denen physikalische und/oder chemische Eigenschaften einer Substanz, eines Substanzgemisches und/oder von Reaktionsgemischen als Funktion der Temperatur oder der Zeit gemessen werden, wobei die zu analysierende Probe einem definierten und/oder kontrollierten Temperaturprogramm unterworfen wird. Obwohl die hierin beschriebenen Verfahren und Vorrichtungen exemplarisch am Beispiel der Dynamischen Differenz-Kalorimetrie (engl.: differential scanning calorimetry, DSC) erläutert werden, versteht es sich, dass das den hierin beschriebenen Verfahren und Vorrichtungen zugrundeliegende Prinzip auch auf anderen Methoden der thermischen Analyse angewendet werden kann, wie etwa der Differenz-Thermoanalyse (DTA), der thermogravimetrischen Analyse (TGA), der Emissionsgasthermoanalyse (engl. evolved gas analysis, EGA), der Thermomechanischen Analyse (TMA), der dynamisch-mechanischen Analyse (DMA), oder dergleichen.

Bei der hierin exemplarisch herangezogenen dynamischen Differenz Kalorimetrie (DSC) handelt es sich um eine thermoanalytische Methode, bei der die Differenz des Wärmestroms einer Referenz, z.B. eines Referenztiegels, und einer Probe, z.B. eines Tiegels mit einem Probekörper, als Funktion der Temperatur und/oder der Zeit gemessen wird. Diese Methode erlaubt es, die abgegebene beziehungsweise aufgenommene Wärmemenge unter einem definierten Temperaturprogramm, insbesondere unter Abkühlung und/oder Aufheizung, eines Probekörpers zu messen. Durch Ablauf des Temperaturprogramms, z.B. einer Aufheizung durch eine Heizung in z.B. einem umgebenden Ofen, wird eine Temperaturdifferenz Δ*T* zwischen der Probe, z.B. mit der Temperatur T₁, und einer Referenz, z.B. mit der Temperatur T₂, bewirkt. Diese kann durch wenigstens ein Messelement und eine zugehörige Messschaltung erfasst werden. Die Temperaturdifferenz Δ*T* resultiert aus unterschiedlichen Wärmekapazitäten von Probe und Referenz. Die Differenz der Wärmeströme, welche proportional zur Temperaturdifferenz ist, kann beispielsweise gegenüber der Referenztemperatur T₂, der Zeit oder dergleichen aufgetragen werden. Mit der Differenz Kalorimetrie kann wenigstens eine der folgenden beispielhaften Bestimmungen durchgeführt werden: Schmelztemperatur, Glasübergangstemperatur, Kristallisationsgrad, kinetische Betrachtungen chemischer Reaktionen, spezifische Wärmekapazität, Phasenübergänge, Zersetzungspunkt und Kunststoffbestimmung.

Unter dem hierin verwendeten "thermischen Effekt" kann jede Art von thermischer und/oder energetischer Effekt verstanden werden, der bei der Messung im Rahmen der thermischen Analyse, z.B. bei der dynamischen Differenz Kalorimetrie, auftreten kann und sich entsprechend in dem Messsignal widerspiegelt. Der thermische Effekt kann beispielsweise durch eine Temperaturänderung und/oder eine physikalische und/oder chemische Umwandlung des Probenmaterials bzw. Referenzmaterials bewirkt werden. Der thermische Effekt kann beispielsweise einen Glasübergang, einen Schmelzpunkt, einen Kristallisationsvorgang, oder dergleichen des jeweiligen Materials umfassen und/oder zurückzuführen sein. Der thermische Effekt kann sich mit entsprechenden Merkmalen in dem Messsignal und/oder der Messkurve widerspiegeln. Beispielsweise kann der Glasübergang im jeweiligen Material durch eine in der Messkurve entsprechend vorhandene Stufe angezeigt werden, um deren Höhendifferenz das Messsignal bzw. die zugehörige Messkurve von einer Basislinie abweicht, die einem DSC-Signal ohne thermischem Effekt entspräche. Weiter beispielsweise kann der Schmelzpunkt durch einen Peak in der Messkurve, d.h. einem relativ spitzen Maximum im Verlauf der Messkurve, in eine positive Richtung angezeigt werden. Der Kristallisationsvorgang durch einen Peak in der Messkurve, d.h. einem relativ spitzen Maximum im Verlauf der Messkurve, in eine negative Richtung angezeigt werden. Aus der vorliegenden Offenbarung wird jedoch deutlich, dass sich das den hierin beschriebenen Verfahren und Vorrichtungen zugrundeliegende Prinzip zur Detektion eines jeden thermischen Effekts eignet, der bei einer thermischen Analyse auftreten kann.

Unter dem "Künstlichen-Intelligenz-Modul" kann jede computer-implementierte Methode aus dem Gebiet der künstlichen Intelligenz verstanden werden, die sich zu der hier beschriebenen Auswertung des Messsignals eignet. Bei dem Künstlichen-Intelligenz-Modul kann es sich beispielsweise um ein Softwaremodul handeln, das von einem Computer, einem Prozessor, usw. ausgeführt werden kann. Alternativ oder zusätzlich dazu kann das Künstliche-Intelligenz-Modul hardwareimplementiert sein. Das Künstliche-Intelligenz-Modul kann auf wenigstens einem Algorithmus, Computermodell oder dergleichen aus dem Gebiet des maschinellen Lernens basieren und/oder wenigstens eines davon umfassen. Um das Künstliche-Intelligenz-Modul für seine Klassifikationsaufgabe einzurichten, kann es mittels Trainingsdaten dazu trainiert werden. Das Bestimmen des thermischen Effekts durch das Künstliche-Intelligenz-Modul kann auch als Klassifizieren und/oder Vorhersagen des thermischen Effekts verstanden bzw. bezeichnet werden.

Gemäß einer Weiterbildung kann der bestimmte Abschnitt des thermischen Effekts und/oder die Auswertung bzw. ihr Ergebnis einem Produktionsplanungs- und/oder-steuerungssystem und/oder einem Qualitätskontrollsystem zugeführt werden. Bei einer derartigen Verwendung können insbesondere folgende Schritte vorgesehen sein: Zumindest stichprobenweise Durchführung einer thermischen Analyse an produzierten bzw. bearbeiteten Gütern und Auswertung der Messergebnisse der thermischen Analyse mittels eines Verfahrens der beschriebenen Art, wobei eine Zuordnung eines jeweiligen Messergebnisses zu einer von mehreren Klassen, z.B. Qualitätsklassen oder Materialklassen erfolgen kann. In zumindest einigen Ausführungsbeispielen kann vorgesehen sein, dass abhängig vom Ergebnis der Auswertung in automatischer Weise, d.h. durch einen Computer oder dergleichen veranlasst, in den betreffenden Prozess, z.B. Produktion und/oder Verarbeitung, eingegriffen wird. Bei diesem Eingriff kann es sich z.B. um eine gesteuerte Veränderung der Betriebsweise, (z.B.

Betriebsparameter, wenigstens einer im Prozess eingesetzten Maschine handeln (bis hin z.B. zum Stoppen der Maschine). Alternativ oder zusätzlich kann der Eingriff beispielsweise umfassen, dass bestimmte produzierte bzw. verarbeitete Güter als Ausschuss aus dem Prozess ausgesondert, ausgeschleust, oder dergleichen werden.

In einer Weiterbildung kann der Abschnitt des thermischen Effekts mit einer unteren Effektgrenze und einer oberen Effektgrenze bezogen auf die Temperaturreihe bestimmt werden. Die obere und untere Effektgrenze können den Abschnitt des thermischen Effekts gegenüber einem anderen thermischen Effekt innerhalb der Messkurve oder einem Abschnitt der Messkurve ohne thermischen Effekt abgrenzen. Dies erlaubt eine exakte Auswertung und/oder eine exakte Angabe des thermischen Effekts. Innerhalb der Messkurve können mehrere, insbesondere zueinander unterschiedliche thermische Effekte auftreten bzw. vorhanden sein. Für jeden einzelnen thermischen Effekt kann jeweils der entsprechende Abschnitt mit seiner unteren Effektgrenze und seiner oberen Effektgrenze bestimmt und/oder angegeben werden. Die unterschiedlichen Abschnitte und/oder thermischen Effekte können einen entsprechenden Bezeichner, z.B. ein entsprechendes Label, aufweisen bzw. damit gekennzeichnet sein.

Gemäß einer Weiterbildung kann das Bestimmen des thermischen Effekts durch das Künstliche-Intelligenz-Modul ferner ein Extrahieren von wenigstens einem jeweiligen Messpunkt aus der Anzahl von Schiebefenstern umfassen. Der wenigstens eine jeweilige extrahierte Messpunkt der Anzahl von Schiebefenstern kann dem Künstlichen-Intelligenz-Modul zugeführt werden. Das Künstliche-Intelligenz-Modul kann für den jeweiligen extrahierten Messpunkt bestimmen, ob für diesen der thermische Effekt gegeben ist. Basierend auf der Bestimmung des thermischen Effekts kann das Künstliche-Intelligenz-Modul für die jeweiligen extrahierten Messpunkte über die Anzahl von Schiebefenstern hinweg den Abschnitt des thermischen Effekts bestimmen.

Beispielsweise kann jedes der Anzahl von Schiebefenstern eine definierte Fenstergröße aufweisen. Die Fenstergröße kann beispielsweise in Abhängigkeit davon gewählt werden, aus wie vielen Messpunkten die Messkurve besteht. Dementsprechend kann jedes Schiebefenster eine, z.B. jeweils gleiche, Anzahl von Messpunkten umfassen. Innerhalb des jeweiligen Schiebefensters kann wenigstens ein Merkmal des von dem jeweiligen Schiebefenster umfassten Kurvenabschnitts der Messkurve extrahiert werden. Das wenigstens eine Merkmal dient zur Klassifikation bzw. der Bestimmung und/oder Detektion. Das wenigstens eine Merkmal kann beispielsweise ein statistisches Merkmal, wie arithmetische Mittel oder dergleichen, ein komplexeres statistisches Merkmal und/oder ein sonstiges zur Charakterisierung des jeweiligen Kurvenabschnitts der Messkurve geeignetes Merkmal umfassen. Beispielsweise kann das wenigstens eine Merkmal ausgewählt sein aus: Standardabweichung, Median, empirische Schleife, Maß für Spiegelsymmetrie, Variationskoeffizient, Maß für Punktsymmetrie, Abweichung von linearer Regression, Wölbung, absolute Energie, C3-Statistik, erste Position des Maximums, Datenpunkte oberhalb des Mittelwerts, Fläche unterhalb linearer Verbindung, minimaler oder maximaler Wert der Ableitung, time reversal assymetry statistic, Schwerpunkt, oder dergleichen. Die Messkurve kann mit einer vorgebbaren oder vorgegebenen Schrittweite und der definierten Fenstergröße durchlaufen werden. Dabei kann das Schiebefenster über die Messkurve geschoben werden, bis der letzte Schritt erreicht ist. In jedem der Schritte kann das wenigstens eine Merkmal extrahiert und ein entsprechendes Label zugeordnet werden. Die Zuordnung des Labels kann beispielsweise darauf basierend erfolgen, ob sich der Mittelpunkt des Schiebefensters innerhalb der Effektgrenzen eines thermischen Effekts befindet. Beispielsweise kann jedem Mittelpunkt oder jedem Messpunkt *X_{Tj},* basierend auf dem entsprechenden wenigstens einen Merkmal, ein Label zugeordnet werden. Die kann z.B. als *X_{Tj}* ∈ [GT, Peak, N] ausgedrückt werden, wobei das Label GT beispielsweise angibt, dass der entsprechende Messpunkt innerhalb der Grenzen xₘᵢₙ und xₘₐₓ eines Glasübergangs (GT) liegt. Das Label Peak gibt beispielsweise an, dass der entsprechende Messpunkt innerhalb der Grenzen eines Peaks liegt. Das Label N gibt beispielsweise an, dass der Messpunkt außerhalb eines Bereichs mit thermischen Effekt liegt, d.h. dort kein thermischer Effekt vorliegt. Die thermischen Effekte können im Wesentlichen durch ihre Form charakterisiert sein. Ein Glasübergang kann eine Stufe im Messsignal und/oder der Messkurve bewirken. Bei einem Peak kann ein lokales Maximum gegeben sein. Das Künstliche-Intelligenz-Modul kann basierend auf dem wenigstens einen extrahierten Merkmal für den Mittelpunkt des betrachteten Schiebefensters das zugehörige Label bestimmen. Dies kann auch als punktbasierte Klassifikation verstanden und/oder bezeichnet werden. Es wird mehr als nur die Information eines einzelnen Messpunktes verwendet, vielmehr wird die Kurve in einer Umgebung des zu klassifizierenden Messpunktes betrachtet.

In einer Weiterbildung kann der Abschnitt des thermischen Effekts basierend darauf bestimmt werden, ob für aneinander angrenzende extrahierte Messpunkte über die Anzahl von Schiebefenstern hinweg der jeweils gleiche thermische Effekt bestimmt wurde. Die aneinander angrenzenden extrahierten Messpunkte mit gleichem thermischem Effekt können, insbesondere zu einem thermischen Effekt, zusammengefasst werden. Wie oben erwähnt, kann für jedes Schiebefenster wenigstens ein Merkmal extrahiert werden, auf dessen Basis das Künstliche-Intelligenz-Modul für den Mittelpunkt des betrachteten Schiebefensters das zugehörige Labe bestimmt, z.B. vorhersagt, abschätzt oder dergleichen, werden. Darauf basierend können aneinander angrenzende Messpunkte, die mit dem gleichen Label gekennzeichnet wurden, zu einem zusammenhängenden Abschnitt des thermischen Effekts zusammengefasst werden. Durch die Zusammenfassung der Messpunkte zu einem thermischen Effekt und weiterer Nachbearbeitungsschritte, z.B. einem Plausibilitätscheck, Merging von Abschnitten, oder dergleichen, kann dann eine Bestimmung eines oder mehrerer thermischer Effekte für das gesamte Sample erhalten werden.

Gemäß einer Weiterbildung kann das Bestimmen für den wenigstens einen jeweiligen extrahierten Messpunkt für einen Mittenbereich oder einen Mittelpunkt des jeweiligen Schiebefensters der Anzahl von Schiebefenstern durchgeführt werden. Wie oben erwähnt, kann das Schiebefenster über die Messkurve geschoben werden, bis der letzte Schritt erreicht ist. In jedem der Schritte kann das wenigstens eine Merkmal extrahiert und ein entsprechendes Label zugeordnet werden. Die Zuordnung des Labels kann darauf basierend erfolgen, ob sich der Mittelpunkt des Schiebefensters innerhalb der Effektgrenzen eines thermischen Effekts befindet.

In einer Weiterbildung kann das Bestimmen, durch das Künstliche-Intelligenz-Modul, ob für das jeweilige aus der Anzahl von Schiebefenstern der thermische Effekt gegeben ist, für unterschiedliche Schiebefenstergrößen durchgeführt werden. Der Abschnitt des thermischen Effekts kann basierend darauf bestimmt werden, ob für unterschiedliche Schiebefenstergrößen der jeweils gleiche thermische Effekt vorausgesagt wurde. Dies kann auch als effektbasierte Klassifikation verstanden und/oder bezeichnet werden. Damit kann der Abschnitt des thermischen Effekts als Ganzes bestimmt bzw. detektiert werden. Durch die Bestimmung und/oder Detektion mit zueinander unterschiedlichen Schiebefenstergrößen wird eine Vielzahl von Bestimmungen, z.B. Vorhersagen, für den gleichen thermischen Effekt erhalten. Diese können zu einem entsprechenden gemeinsamen thermischen Effekt zusammengeführt werden.

Gemäß einer Weiterbildung können die mit den unterschiedlichen Schiebefenstergrößen erhaltenen Bestimmungen für den jeweiligen Messpunkt gezählt werden. Basierend auf der Zählung kann der Abschnitt des thermischen Effekts bestimmt werden. Beispielsweise kann der thermische Effekt mittels einer Mehrheitsentscheidung bestimmt werden. In anderen Worten kann eine Zählung der Bestimmungen des thermischen Effekts, also die Effektbestimmungen bzw. Effektvorhersagen für die einzelnen Messpunkte erfolgen.

In einer Weiterbildung kann der thermische Effekt einem Glasübergang, einem Schmelzen oder einem Kristallisationsvorgang eines Materials einer Probe der thermischen Analyse zugeordnet sein. Wie oben erwähnt, können die thermischen Effekte im Wesentlichen durch ihre Form charakterisiert sein. Ein Glasübergang kann eine Stufe im Messsignal und/oder in der Messkurve bewirken. Bei einem Peak infolge von Schmelzen oder Kristallisation kann ein lokales Maximum gegeben sein. Dies kann durch das Künstliche-Intelligenz-Modul bestimmt, vorhergesagt und/oder klassifiziert werden.

Gemäß einem zweiten Aspekt wird eine Vorrichtung zum Auswerten eines Messsignals einer thermischen Analyse vorgeschlagen. Die Vorrichtung weist eine Datenschnittstelle auf, die dazu eingerichtet ist, das Messsignal der thermischen Analyse zu empfangen, wobei das Messsignal eine auf einer Temperaturreihe basierende Messkurve angibt. Zudem weist die Vorrichtung eine Verarbeitungslogik, die dazu eingerichtet ist, eine Anzahl von Schiebefenstern basierend auf dem Messsignal zu bestimmen, wobei jedes Schiebefenster einem entsprechenden Abschnitt der Messkurve mit einer Anzahl von Messpunkten zugeordnet ist, und durch ein von der Verarbeitungslogik ausgeführtes, zur Klassifikation eingerichtetes Künstliches-Intelligenz-Modul zu bestimmen, ob für das jeweilige aus der Anzahl von Schiebefenstern ein thermischer Effekt eines der thermischen Analyse zugrundeliegenden Proben-Materials gegeben ist. Das Künstliche-Intelligenz-Modul ist dazu eingerichtet, einen zusammenhängenden Abschnitt des thermischen Effekts bezogen auf die Messkurve zu bestimmen.

Die Vorrichtung kann dazu eingerichtet sein, das beschriebene Verfahren gemäß dem ersten Aspekt durchzuführen und/oder auszuführen. Die Verarbeitungslogik kann eine Rechnereinrichtung, einen Prozessor, eine CPU, GPU, oder dergleichen aufweisen oder als solche ausgebildet sein. Die Verarbeitungslogik kann mit der Datenschnittstelle, einem Datenspeicher, usw. gekoppelt sein. Bezüglich der möglichen Weiterbildungen der Vorrichtung wird auf das entsprechende Verfahren gemäß dem ersten Aspekt verwiesen.

Gemäß einer Weiterbildung kann das Künstliche-Intelligenz-Modul zumindest eines von einer Support-Vektor-Maschine und einer Random Forest-Methode umfassen. Die Support-Vektor-Maschine und die Random Forest Methode sind jeweils Methoden des maschinellen Lernens und eignen sich zur Klassifikation von Daten. Obwohl es auch denkbar wäre, das Künstliche-Intelligenz-Modul mit wenigstens einem neuronalen Netz, z.B. einem Faltungsnetz (engl. Convolutional Neural Network, CNN) auszuführen, haben sich die Support-Vektor-Maschine und die Random Forest Methode als besonders einfach implementierbar, recheneffizient und zuverlässig bei der Bestimmung des thermischen Effekts erwiesen. Gegenüber einem neuronalen Netz benötigen die Support-Vektor-Maschine und/oder die Random Forest-Methode für ihr Training z.B. einen kleineren Datensatz, weniger Laufzeit und weniger leistungsstarke Hardware, um das Training in einer angemessenen Zeit durchzuführen.

Gemäß einem dritten Aspekt wird ein Verfahren zum Generieren von Trainingsdaten für ein Künstliches-Intelligenz-Modul vorgeschlagen, das zum Auswerten eines Messsignals einer thermischen Analyse zu trainieren ist. Das Verfahren umfasst ein Empfangen eines Trainings-Datensatzes, der eine Anzahl von Samples jeweils umfassend ein Messsignal einer thermischen Analyse und wenigstens einen dem jeweiligen Messsignal zugeordneten thermischen Effekt einer der thermischen Analyse zugrundeliegenden Probe aufweist, wobei das jeweilige Messsignal eine auf einer Temperaturreihe oder Zeitreihe basierende Messkurve angibt. Zudem umfasst das Verfahren ein Anwenden von einer Anzahl von Schiebefenstern auf die Anzahl von Samples. Das Verfahren umfasst weiter ein Zuordnen eines Labels zu dem jeweiligen aus der Anzahl von Schiebefenstern, wobei das jeweilige Label den entsprechenden thermischen Effekt als einen zusammenhängenden Abschnitt des thermischen Effekts bezogen auf die jeweilige Messkurve angibt. Zudem umfasst das Verfahren ein Generieren von Trainingsdaten basierend auf dem Trainings-Datensatz und dem jeweils zugeordneten Label.

Die Anzahl, z.B. Vielzahl, von Samples des Trainings-Datensatzes kann beispielsweise in der Form "Sample₁ (Messdaten, Effekte)" bis "Sample_{N} (Messdaten, Effekte)" bereitgestellt werden. Ein einzelnes Sample kann die Messdaten in Form der Messkurve mit einer unteren und oberen Effektgrenze umfassen. Um für die Klassifikation mehr als die Informationen eines einzelnen Messpunktes zu verwenden, kann die Messkurve mithilfe der Anzahl von Schiebefenstern in einer Umgebung des zu klassifizierenden Messpunktes betrachtet werden. Innerhalb des jeweiligen Schiebefensters kann, wie oben erwähnt, wenigstens ein Merkmal des jeweiligen Kurvenabschnitts extrahiert werden. Optional kann das wenigstens eine extrahierte Merkmal vorverarbeitet, z.B. skaliert, werden.

Das Zuordnen des jeweiligen Labels kann für die oben erwähnte punktbasierte Klassifikation dadurch erfolgen, dass die Anzahl von Schiebefenster mit jeweils definierter Fenstergröße und definierter Schrittweite über die Messkurve geschoben werden. In jedem der Schritte kann das wenigstens eine Merkmal für das jeweilige Schiebefenster extrahiert werden und das entsprechende Label zugeordnet werden, je nachdem, ob sich der Mittelpunkt des betrachteten Schiebefensters innerhalb von Effektgrenzen eines thermischen Effekts, also z.B. Peak-Grenzen, Glasübergangs-Grenzen oder außerhalb der thermischen Effekte befindet. Die bei einer Messung verwendete Fenstergröße kann davon abhängig sein, aus wie vielen Messpunkten eine Messkurve besteht. Alternativ dazu, kann das Zuordnen des jeweiligen Labels für die oben erwähnte effektbasierte Klassifikation, bei der thermische Effekt als Ganzes erkannt werden soll, dadurch erfolgen, dass die Anzahl von Schiebefensters nicht punktweise, d.h. messpunktweise, mit einer festen Fenstergröße über die Messkurve geschoben wird, sondern die Anzahl von Schiebefenstern basierend auf den in der Messkurve vorkommenden Effekten gewählt.

In einer Weiterbildung kann das Verfahren ferner ein Zuführen der generierten Trainingsdaten an das oder zu dem Künstlichen-Intelligenz-Modul umfassen. Auf diese Weise lässt sich das Künstliche-Intelligenz-Modul für das Durchführen des Verfahrens gemäß dem ersten Aspekt trainieren.

Ein vierter Aspekt stellt ein computerlesbares Medium zur Verfügung. Auf dem computerlesbaren Medium können die gemäß dem Verfahren nach dem dritten Aspekt generierten Trainingsdaten gespeichert sein. Alternativ dazu, ist das computerlesbare Medium ein Datenträgersignal, das die gemäß dem Verfahren nach dem dritten Aspekt generierten Trainingsdaten überträgt.

Gemäß einem fünften Aspekt wird eine Vorrichtung zum Generieren von Trainingsdaten für ein Künstliches-Intelligenz-Modul vorgeschlagen, das zum Auswerten eines Messsignals einer thermischen Analyse zu trainieren ist. Die Vorrichtung weist eine Datenschnittstelle auf, die dazu eingerichtet ist, einen Trainings-Datensatz zu empfangen, der eine Anzahl von Samples jeweils umfassend ein Messsignal einer thermischen Analyse und wenigstens einen dem jeweiligen Messsignal zugeordneten thermischen Effekt einer der thermischen Analyse zugrundeliegenden Probe, wobei das jeweilige Messsignal eine auf einer Temperaturreihe basierende Messkurve angibt. Zudem weist die Vorrichtungeine Verarbeitungslogik auf, die dazu eingerichtet ist, eine Anzahl von Schiebefenstern auf die Anzahl von Samples anzuwenden, ein Label zu dem jeweiligen aus der Anzahl von Schiebefenstern zuzuordnen, wobei das jeweilige Label den entsprechenden thermischen Effekt als einen zusammenhängenden Abschnitt des thermischen Effekts bezogen auf die jeweilige Messkurve angibt, und Trainingsdaten basierend auf dem Trainings-Datensatz und dem jeweils zugeordneten Label zu generieren.

Die Vorrichtung kann dazu eingerichtet sein, das beschriebene Verfahren gemäß dem dritten Aspekt durchzuführen und/oder auszuführen. Die Verarbeitungslogik kann eine Rechnereinrichtung, einen Prozessor, eine CPU, oder dergleichen aufweisen oder als solche ausgebildet sein. Die Verarbeitungslogik kann mit der Datenschnittstelle gekoppelt sein. Bezüglich der möglichen Weiterbildungen der Vorrichtung wird auf das entsprechende Verfahren gemäß dem dritten Aspekt verwiesen.

In einer Weiterbildung kann die Vorrichtung ferner dazu eingerichtet sein, die generierten Trainingsdaten für das Künstliche-Intelligenz-Modul bereitzustellen und/oder die generierten Trainingsdaten dem Künstlichen-Intelligenz-Modul zuzuführen.

Gemäß einem sechsten Aspekt wird ein Computerprogramm zur Verfügung gestellt. Das Computerprogramm umfasst Befehle, die bei der Ausführung des Computerprogramms durch einen Computer, diesen veranlassen, das Verfahren gemäß dem ersten Aspekt und/oder das Verfahren gemäß dem dritten Aspekt durchzuführen.

Gemäß einem siebten Aspekt wird ein computerlesbares Medium zur Verfügung gestellt. Das computerlesbare Medium umfasst Befehle, die bei der Ausführung durch einen Computer, diesen veranlassen, das Verfahren gemäß dem ersten Aspekt und/oder das Verfahren gemäß dem dritten Aspekt durchzuführen.

Es versteht sich, dass die vorstehenden Aspekte und Weiterbildungen beliebig miteinander kombiniert werden können, sofern die jeweilige Kombination nicht explizit ausgeschlossen ist.

### KURZBESCHREIBUNG DER ZEICHNUNGEN

Die Erfindung wird ausführlicher mit Verweis auf beispielhafte Ausführungsformen beschrieben, die in den beiliegenden Zeichnungen dargestellt sind.

Die beiliegenden Zeichnungen sind enthalten, um ein weiteres Verständnis dieser Erfindung zu ermöglichen und sind in diese Beschreibung einbezogen und stellen einen Teil davon dar. Die Zeichnungen illustrieren die Ausführungsformen dieser Erfindung und dienen gemeinsam mit der Beschreibung der Erklärung der Grundsätze der Erfindung. Andere Ausführungsformen dieser Erfindung und viele der vorgesehenen Vorteile dieser Erfindung sind leicht zu verstehen, wenn sie durch Verweis auf die folgende ausführliche Beschreibung besser verständlich werden. Die Elemente der Zeichnungen sind nicht notwendigerweise im gleichen Maßstab zueinander gezeichnet. Gleiche Bezugszeichen bezeichnen entsprechend ähnliche Teile.
- Fig. 1: illustriert schematisch eine beispielhafte Anordnung zum Durchführen einer thermischen Analyse und eine Vorrichtung zum Auswerten eines Messsignals einer thermischen Analyse gemäß einer Ausführungsform.
- Fig. 2: zeigt ein beispielhaftes Messignal einer thermischen Analyse in Form einer Messkurve mit thermischen Effekten.
- Fig. 3: zeigt eine beispielhafte Vorrichtung zum Generieren von Trainingsdaten für ein Künstliches-Intelligenz-Modul gemäß einer Ausführungsform.
- Fig. 4: illustriert anhand eines Messsignals einen ersten beispielhaften Trainingsprozess für ein Künstliches-Intelligenz-Modul gemäß einer Ausführungsform.
- Fig. 5: illustriert in einem Blockdiagramm einen ersten beispielhaften Trainingsprozess für ein Künstliches-Intelligenz-Modul gemäß einer Ausführungsform.
- Fig. 6: illustriert in einem Blockdiagramm einen ersten beispielhaften Bestimmungs- bzw. Detektionsprozess für thermische Effekte gemäß einer Ausführungsform.
- Fig. 7: illustriert in einem Blockdiagramm einen zweiten beispielhaften Trainingsprozess für ein Künstliches-Intelligenz-Modul gemäß einer Ausführungsform.
- Fig. 8: illustriert in einem Flussdiagramm ein Verfahren zum Auswerten eines Messsignals einer thermischen Analyse gemäß einer Ausführungsform.
- Fig. 9: illustriert in einem Flussdiagramm ein Verfahren zum Generieren von Trainingsdaten für ein Künstliches-Intelligenz-Modul gemäß einer Ausführungsform.

In den Figuren bezeichnen gleiche Bezugszeichen gleiche oder funktional ähnliche Bauteile, wenn nicht anders angegeben. Alle Richtungsbezeichnungen, wie "oben", "unten", "links", "rechts", "über", "unter", "horizontal", "vertikal", "hinten", "vorne" und ähnliche Begriffe werden nur zur Erklärungszwecken verwendet und sollen die Ausführungsformen nicht auf die spezifischen Anordnungen beschränken, die in den Zeichnungen dargestellt sind.

### AUSFÜHRLICHE BESCHREIBUNG DER ERFINDUNG

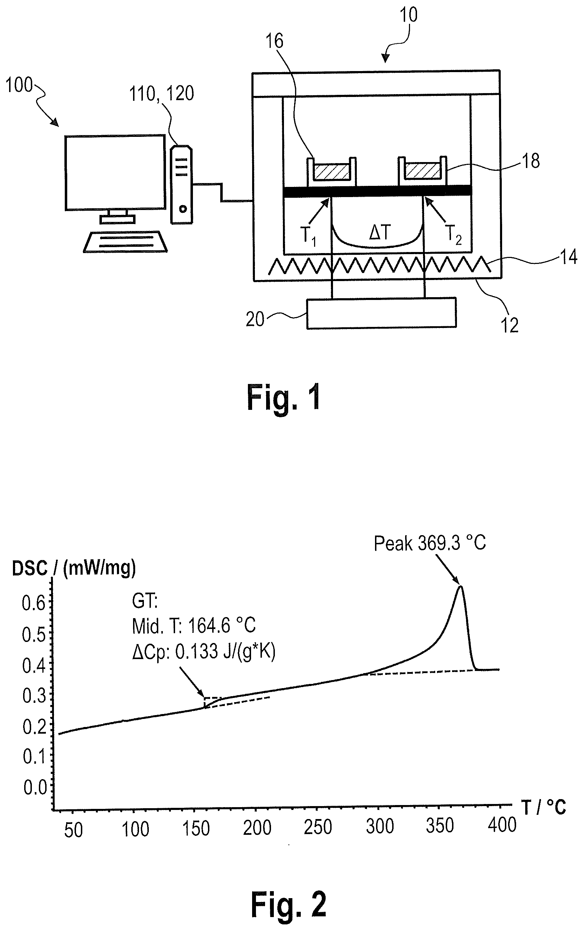

Fig. 1 illustriert schematisch eine beispielhafte Anordnung 10 zum Durchführen einer thermischen Analyse. Zudem zeigt Fig. 1 eine beispielhafte Vorrichtung 100 zum Auswerten eines Messsignals einer thermischen Analyse.

Bei der hierin exemplarisch herangezogenen Dynamischen Differenz-Kalorimetrie (engl.: differential scanning calorimetry, DSC) handelt es sich um eine thermoanalytische Methode, bei der die Differenz eines Wärmestroms einer Referenz, z.B. eines Referenztiegels, und einer Probe, z.B. eines Tiegels mit einem Probekörper, als Funktion der Temperatur und/oder der Zeit gemessen wird. Diese Methode erlaubt es, die abgegebene bzw. aufgenommene Wärmemenge unter einem definierten Temperaturprogramm, insbesondere unter Abkühlung und/oder Aufheizung, eines Probekörpers zu messen. Die Anordnung 10 weist einen Ofen 12 mit einer Heizeinrichtung 14, z.B. einer Heizwendel, auf. Zudem weist die Anordnung 10 eine zu analysierende Probe 16, z.B. den Tiegel mit dem Probekörper, und eine Referenz 18, z.B. den Referenztiegel, auf. Des Weiteren weist die Anordnung wenigstens ein Messelement zur Temperaturmessung der jeweiligen Temperatur T₁, T₂ der Probe 16 und Referenz 18 sowie eine zugehörige Messschaltung 20 auf, die dazu eingerichtet ist, aus der Temperaturmessung die Temperaturdifferenz ΔT zu bestimmen. Die Probe 16 und die Referenz 18 weisen zueinander unterschiedliche Wärmekapazitäten auf. Die Differenz der Wärmeströme der Probe 16 und der Referenz 18 ist zumindest im Wesentlichen proportional zu der Temperaturdifferenz ΔT. Die Differenz der Wärmeströme kann beispielsweise gegenüber der Referenztemperatur T₂ oder gegenüber der der Zeit aufgetragen werden. Mit der DSC kann wenigstens eine der folgenden beispielhaften Bestimmungen durchgeführt werden: Schmelztemperatur, Glasübergangstemperatur, Kristallisationsgrad, kinetische Betrachtungen chemischer Reaktionen, spezifische Wärmekapazität, Phasenübergänge, Zersetzungspunkt und Kunststoffbestimmung. Die Anordnung 10 ist dazu eingerichtet, ein entsprechendes Messsignal zu generieren und/oder bereitzustellen, wobei das Messsignal eine auf einer Temperaturreihe basierende Messkurve angibt.

Die Vorrichtung 100 ist dazu eingerichtet, das Messsignal der thermischen Analyse zu empfangen und auszuwerten. Die Vorrichtung 100 weist eine Datenschnittstelle 110 auf, die dazu eingerichtet ist, das Messsignal der thermischen Analyse zu empfangen. Die Vorrichtung 100 weist zudem eine Verarbeitungslogik 120 auf, die mit der Datenschnittstelle 110 gekoppelt und dazu eingerichtet ist, das empfangene Messsignal zu verarbeiten, insbesondere auszuwerten. Die Verarbeitungslogik 120 kann beispielsweise eine Rechnereinrichtung, einen Prozessor, eine CPU, GPU, oder dergleichen aufweisen oder als solche ausgebildet sein. Lediglich zur besseren Veranschaulichung ist die Vorrichtung 100 hier als Computer, z.B. Desktopcomputer oder Workstation, dargestellt. Die Vorrichtung 100 kann jedoch auch eine Vorrichtung der Anordnung 10 sein und beispielsweise durch ein dediziertes Gerät ausgebildet sein.

Die Verarbeitungslogik 120 ist dazu eingerichtet, eine Anzahl von Schiebefenstern basierend auf dem Messsignal zu bestimmen. Jedes dieser Schiebefenster ist einem entsprechenden Abschnitt der Messkurve mit einer Anzahl von Messpunkten zugeordnet. Zudem ist die Verarbeitungslogik 120 dazu eingerichtet, durch ein von der Verarbeitungslogik 120 ausgeführtes, zur Klassifikation eingerichtetes, z.B. trainiertes, Künstliches-Intelligenz-Modul zu bestimmen, ob für das jeweilige aus der Anzahl von Schiebefenstern ein thermischer Effekt eines der thermischen Analyse zugrundeliegenden Proben-Materials gegeben ist. Das Künstliche-Intelligenz-Modul ist dazu eingerichtet, einen zusammenhängenden Abschnitt des thermischen Effekts bezogen auf die Messkurve zu bestimmen.

Das Künstliche-Intelligenz-Modul kann beispielsweise zumindest eines von einer Support-Vektor-Maschine und einer Random Forest-Methode umfassen. Die Support-Vektor-Maschine und die Random Forest Methode sind jeweils Methoden des maschinellen Lernens und eignen sich zur Klassifikation von Daten. Obwohl es auch denkbar wäre, das Künstliche-Intelligenz-Modul mit wenigstens einem neuronalen Netz, z.B. einem Faltungsnetz (engl. Convolutional Neural Network, CNN) auszuführen, haben sich die Support-Vektor-Maschine und die Random Forest Methode als besonders einfach implementierbar, recheneffizient und zuverlässig bei der Bestimmung des thermischen Effekts erwiesen.

Für die Bestimmung des wenigstens einen thermischen Effekts werden weiter unten zwei beispielhafte Ansätze beschrieben, nämlich eine punktbasierte Klassifikation und eine effektbasierte Klassifikation.

Fig. 2 zeigt ein beispielhaftes Messignal einer thermischen Analyse in Form einer Messkurve mit thermischen Effekten. Das Messignal stammt von der Anordnung 10 und kann durch die Vorrichtung 100 verarbeitet bzw. ausgewertet werden.

In dem Messsignal sind zwei beispielhafte thermische Effekte der enthalten. Mit "GT" ist ein Glasübergang in dem Material der Probe 16 bezeichnet, der sich im Messsignal als Stufe darstellt bzw. durch eine solche charakterisiert ist. Mit "Peak" ist hier ein Schmelzen des Materials der Probe 16 bezeichnet, wobei eine ähnliche Charakteristik in negativer Richtung bei einem Kristallisationsvorgang des Materials der Probe 16 auftreten könnte, der gleichermaßen mittels der Vorrichtung 100 bestimmt werden könnte. Der Schmelzpunkt ist durch den Peak in der Messkurve, d.h. einem relativ spitzen Maximum, charakterisiert.

Die Vorrichtung 100 ist dazu eingerichtet, solche thermischen Effekte in dem Messsignal automatisiert auszuwerten.

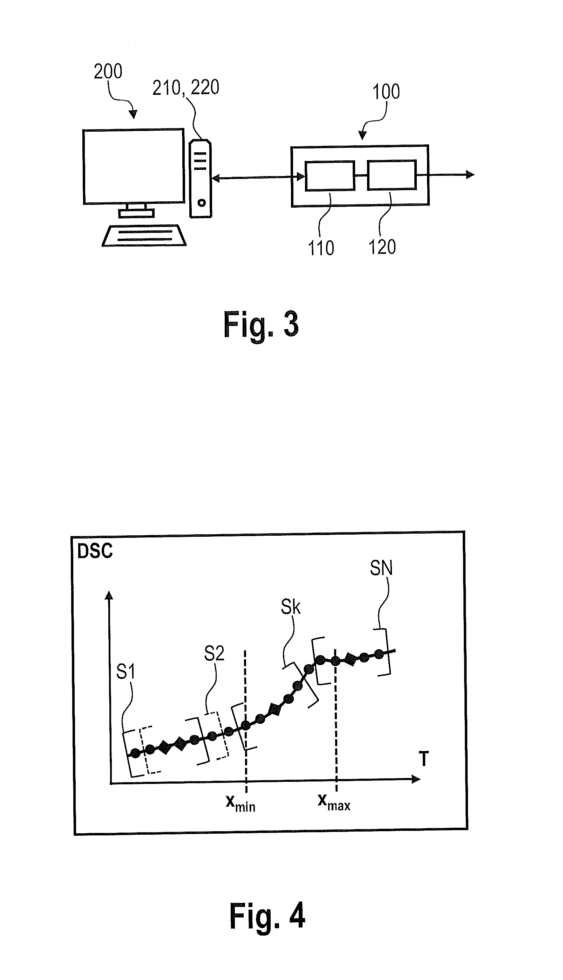

Fig. 3 zeigt eine beispielhafte Vorrichtung 200 zum Generieren von Trainingsdaten für das Künstliche-Intelligenz-Modul der Vorrichtung 100. Die Vorrichtung 200 ist mit der Vorrichtung 100 koppelbar bzw. gemäß Fig. 3 gekoppelt.

Die Vorrichtung 200 weist eine Datenschnittstelle 210 und eine Verarbeitungslogik 220 auf, die miteinander gekoppelt sind. Die Verarbeitungslogik 220 kann beispielsweise eine Rechnereinrichtung, einen Prozessor, eine CPU, GPU, oder dergleichen aufweisen oder als solche ausgebildet sein. Lediglich zur besseren Veranschaulichung ist die Vorrichtung 200 hier als Computer, z.B. Desktopcomputer oder Workstation, dargestellt.

Die Datenschnittstelle 210 ist dazu eingerichtet, einen Trainings-Datensatz zu empfangen, der eine Anzahl von Samples jeweils umfassend ein Messsignal einer thermischen Analyse und wenigstens einen dem jeweiligen Messsignal zugeordneten thermischen Effekt einer der thermischen Analyse zugrundeliegenden Probe umfasst. Das jeweilige Messsignal gibt eine auf einer Temperaturreihe basierende Messkurve an. Die Verarbeitungslogik 220 ist dazu eingerichtet, eine Anzahl von Schiebefenstern auf die Anzahl von Samples anzuwenden. Die Verarbeitungslogik 220 ist zudem dazu eingerichtet, ein Label zu dem jeweiligen aus der Anzahl von Schiebefenstern zuzuordnen, wobei das jeweilige Label den entsprechenden thermischen Effekt als einen zusammenhängenden Abschnitt des thermischen Effekts bezogen auf die jeweilige Messkurve angibt. Des Weiteren ist die Verarbeitungslogik 220 dazu eingerichtet, Trainingsdaten basierend auf dem Trainings-Datensatz und dem jeweils zugeordneten Label zu generieren.

Zudem ist die Vorrichtung 200 dazu eingerichtet, z.B. über die Datenschnittstelle 210, die generierten Trainingsdaten für das Künstliche-Intelligenz-Modul bereitzustellen und/oder die generierten Trainingsdaten dem Künstlichen-Intelligenz-Modul der Vorrichtung 100 zuzuführen.

Für das Training des Künstlichen-Intelligenz-Moduls der Vorrichtung 100 mittels der Vorrichtung 200 werden weiter unten zwei beispielhafte Ansätze beschrieben, nämlich ein punktbasierter und ein effektbasierter Ansatz.

Fig. 4 illustriert anhand eines Messsignals einen ersten beispielhaften Trainingsprozess für das Künstliche-Intelligenz-Modul der Vorrichtung 100. Der Trainingsprozess gemäß Fig. 4 kann als punktbasierter Ansatz oder punktbasierte Klassifikation verstanden bzw. bezeichnet werden.

Das Messsignal liegt als Messkurve mit einer Anzahl von Messpunkten vor. Die Messpunkte sind generell als runde Punkte dargestellt. Auf die Messpunkte sind eine Anzahl von Schiebefenstern angewendet. In anderen Worten werden über die Messkurve und/oder die Messpunkte die Anzahl von Schiebenfenstern geschoben. Zur besseren Veranschaulichung sind in Fig. 4 die jeweiligen Mittelpunkte der Schiebefenster als Raute dargestellt. Die Schiebefenster sind als eckige Klammern dargestellt.

Bei dem punktbasierten Trainingsprozess wird der Detektionsprozess des Bereichs des thermischen Effekts zurückgeführt auf eine Klassifikation der einzelnen in der Messkurve enthaltenen Messpunkte. Konkret soll also jedem Messpunkt X_{Tj} ein Label zugeordnet werden, was beispielsweise ausgedrückt werden kann als: *XTj* ∈ [GT, Peak, N], wobei das Label GT, bedeutet, dass der Punkt innerhalb der Grenzen bzw. Effektgrenzen xₘᵢₙ und xₘₐₓ eines Glasübergangs liegt. Entsprechend für das Label Peak innerhalb der Grenzen eines Peaks. Das Label N bedeutet, dass der Messpunkt außerhalb der Bereiche liegt, in dem die thermischen Effekte bzw. energetischen Effekte stattfinden. Wie oben erwähnt, sind die thermischen Effekte sind im Wesentlichen durch ihre Form charakterisiert. Bei einem Glasübergang ist eine Stufe im Messsignal erkennbar. Bei einem Peak liegt ein lokales Maximum im Kurvenverlauf der Messkurve vor. Innerhalb des jeweiligen Schiebefensters werden unterschiedliche Merkmale für diesen Kurvenabschnitt extrahiert. Diese dienen zum Training des Klassifikators. Mögliche Merkmale, welche innerhalb des jeweiligen Schiebefensters extrahiert werden können, sind beispielsweise die Standardabweichung oder das arithmetische Mittel des betrachteten Abschnitts, wobei andere und/oder weitere Merkmale denkbar sind. Bei dem Trainingsprozess der punktbasierten Klassifikation wird das jeweilige Schiebefenster mit einer Fenstergröße N_{w} über die Messkurve geschoben, bis der letzte Schritt erreicht ist. Die Fenstergröße N_{w} legt fest, wie viele Messpunkte sich innerhalb des jeweiligen Schiebfenster befinden. In jedem der Schritte werden die Merkmale für dieses Schiebefenster extrahiert und das entsprechende Label, je nachdem, ob sich der Mittelpunkt des betrachteten Fensters, innerhalb von Peak-Grenzen, Glasübergangs-Grenzen oder außerhalb der Effekte befindet.

Lediglich exemplarisch ist in Fig. 4 die Schiebefenstergröße N_{w} = 5. Die bei einer Messung verwendete Schiebefenstergröße kann beispielsweise in Abhängigkeit davon gewählt werden, wie viele Messpunkte die Messkurve aufweist. Dies kann beispielsweise einen Koeffizienten bewerkstelligt werden, durch den die Anzahl der Messpunkte geteilt wird. Beispielsweise kann für eine Messung, die N = 15000 Messpunkte umfasst und sich über einen Temperaturbereich von 300K erstreckt, einer Schiebefensterkoeffizienten wₖ = 5. Dabei ergibt sich die Anzahl der in einem Schiebefenster betrachteten Punkte zu N_{w} = 3000 und das Schiebefenster erstreckt sich über einen Temperaturbereich von 60K. Beim Schieben des Schiebefensters über die Messkurve kann gemäß Fig. 4 in einem ersten Schritt S1, in einem zweiten Schritt S2 und in einem letzten Schritt SN das Label "N" zugeordnet werden. Dem Schiebefenster im Schritt Sk das Label "GT", da sich der Mittelpunkt dieses Schiebefensters innerhalb der Grenzen eines Glasübergangs befindet. Wie oben erwähnt, kann die Zuordnung des Labels darauf basierend erfolgen, ob sich der Mittelpunkt des jeweiligen Schiebefensters innerhalb der Effektgrenzen eines thermischen Effekts befindet.

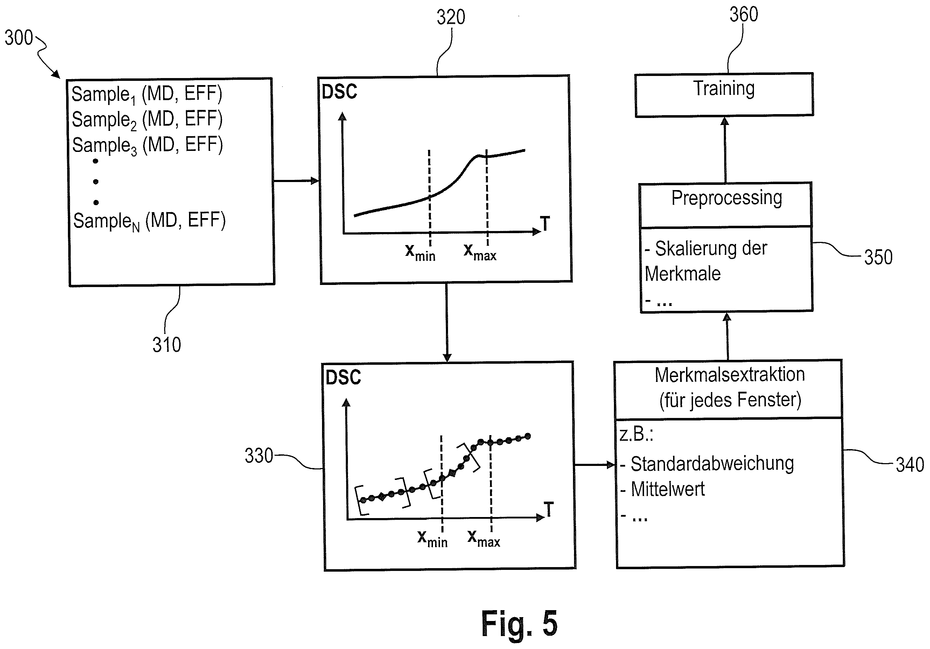

Fig. 5 illustriert den ersten beispielhaften Trainingsprozess für das Künstliche-Intelligenz-Modul der Vorrichtung 100 aus Fig. 4 in einem Blockdiagramm 300 mit den Blöcken 310 bis 360. Dementsprechend ist der Trainingsprozess hier auch punktbasiert.

In Block 310 wird über die Datenschnittstelle 210 der Vorrichtung 200 ein Trainings-Datensatz empfangen, der eine Anzahl N von Samples jeweils umfassend ein Messsignal MD der thermischen Analyse und wenigstens einen dem jeweiligen Messsignal MS zugeordneten thermischen Effekt EFF einer der thermischen Analyse zugrundeliegenden Probe umfasst.

Das jeweilige Messsignal MD gibt eine auf einer Temperaturreihe basierende Messkurve an, wie sie in Block 320 dargestellt ist.

Gemäß Block 330 ist die Verarbeitungslogik 220 dazu eingerichtet, eine Anzahl von Schiebefenstern auf die Anzahl von Samples anzuwenden. Beispielsweise kann jedes der Anzahl von Schiebefenstern eine definierte Fenstergröße aufweisen. Die Fenstergröße kann beispielsweise in Abhängigkeit davon gewählt werden, aus wie vielen Messpunkten die Messkurve besteht. Dementsprechend kann jedes Schiebefenster eine, z.B. jeweils gleiche, Anzahl von Messpunkten umfassen.

Gemäß Block 340 wird innerhalb des jeweiligen Schiebefensters wenigstens ein Merkmal des von dem jeweiligen Schiebefenster umfassten Kurvenabschnitts der Messkurve extrahiert werden. Das wenigstens eine Merkmal dient zur Klassifikation bzw. der Bestimmung und/oder Detektion. Das wenigstens eine Merkmal kann beispielsweise ein statistisches Merkmal, wie arithmetische Mittel oder dergleichen, ein komplexeres statistisches Merkmal und/oder ein sonstiges zur Charakterisierung des jeweiligen Kurvenabschnitts der Messkurve geeignetes Merkmal umfassen. Beispielsweise kann das wenigstens eine Merkmal ausgewählt sein aus: Standardabweichung, Median, empirische Schleife, Maß für Spiegelsymmetrie, Variationskoeffizient, Maß für Punktsymmetrie, Abweichung von linearer Regression, Wölbung, absolute Energie, C3-Statistik, erste Position des Maximums, Datenpunkte oberhalb des Mittelwerts, Fläche unterhalb linearer Verbindung, minimaler oder maximaler Wert der Ableitung, time reversal assymetry statistic, Schwerpunkt, oder dergleichen. Die Messkurve kann mit einer vorgebbaren oder vorgegebenen Schrittweite und der definierten Fenstergröße durchlaufen werden. Dabei kann das Schiebefenster über die Messkurve geschoben werden, bis der letzte Schritt erreicht ist. In jedem der Schritte kann das wenigstens eine Merkmal extrahiert und ein entsprechendes Label zugeordnet werden. Die Zuordnung des Labels kann beispielsweise darauf basierend erfolgen, ob sich der Mittelpunkt des Schiebefensters innerhalb der Effektgrenzen eines thermischen Effekts befindet. Beispielsweise kann jedem Mittelpunkt oder jedem Messpunkt *X_{Tj}*, basierend auf dem entsprechenden wenigstens einen Merkmal, ein Label zugeordnet werden. Die kann z.B. als *X_{Tj}* ∈ [GT, Peak, N] ausgedrückt werden, wobei das Label GT beispielsweise angibt, dass der entsprechende Messpunkt innerhalb der Grenzen xmin und xmax eines Glasübergangs (GT) liegt. Das Label Peak gibt beispielsweise an, dass der entsprechende Messpunkt innerhalb der Grenzen eines Peaks liegt. Das Label N gibt beispielsweise an, dass der Messpunkt außerhalb eines Bereichs mit thermischen Effekt liegt, d.h. dort kein thermischer Effekt vorliegt. Der Abschnitt des thermischen Effekts kann basierend darauf bestimmt werden, ob für aneinander angrenzende extrahierte Messpunkte über die Anzahl von Schiebefenstern hinweg der jeweils gleiche thermische Effekt bestimmt wurde. Die aneinander angrenzenden extrahierten Messpunkte mit gleichem thermischem Effekt können, insbesondere zu einem thermischen Effekt, zusammengefasst werden.

Gemäß Block 350 kann das wenigstens eine extrahierte Merkmal vorverarbeitet (engl. preprocessing), z.B. skaliert, werden.

Gemäß Block 360 ist die Verarbeitungslogik 220 dazu eingerichtet, Trainingsdaten basierend auf dem Trainings-Datensatz und dem jeweils zugeordneten Label zu generieren. Diese können dem Künstlichen-Intelligenz-Modul zugeführt werden.

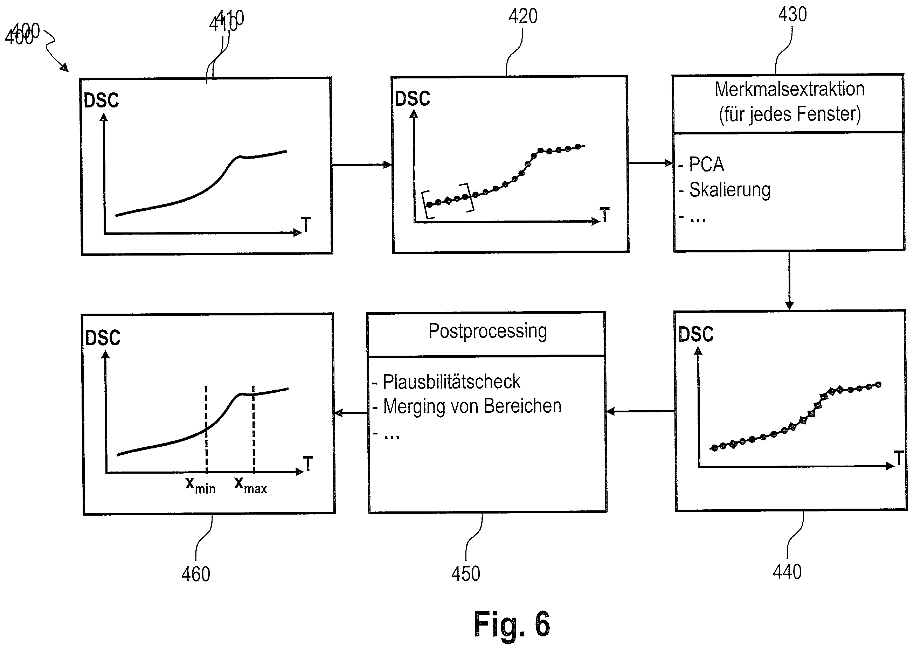

Fig. 6 illustriert einen ersten beispielhaften Bestimmungs- bzw. Detektionsprozess für thermische Effekte der Vorrichtung 100 in einem Blockdiagramm 400 mit den Blöcken 410 bis 460. Die Bestimmung bzw. Detektion der thermischen Effekte erfolgt hier analog zu dem ersten beispielhaften Trainingsprozess punktbasiert.

Während des Detektionsprozesses auf Basis des Künstlichen-Intelligenz-Moduls der Vorrichtung 100, welches mittels des ersten beispielhaften Trainingsprozesses trainiert wurde, können die in der Messkurve enthaltenen thermischen Effekte detektiert bzw. bestimmt werden und deren Grenzen xₘᵢₙ und ×ₘₐₓ bestimmt werden. Das Vorgehen zur Detektion der Effekte ist analog zu dem des Trainingsprozesses gemäß Fig. 4 und Fig. 5.

Weiter Bezug nehmend auf Fig. 6, wird in Block 410 das Messsignal empfangen bzw. erhalten. Gemäß Block 420 wird die Messkurve mit vorgegebener Schrittweite und definierter Schiebefenster durchlaufen. Gemäß Block 430 werden für jedes Schiebefenster Merkmale extrahiert und mit den im Training angepassten Vorverarbeitungsschritten transformiert. Auf Basis dieser Merkmale trifft das Künstliche-Intelligenz-Modul gemäß Block 440 eine Vorhersage bzw. macht eine Bestimmung für das Label des Mittelpunkts des betrachteten Schiebefensters. Durch anschließende Nachverarbeitung der vorhergesagten Labels für die Messpunkte, werden in Block 450 aneinander angrenzende Punkte, welche mit dem Label des gleichen Effekts gekennzeichnet wurden zu einem Effektbereich zusammengefasst. Durch die Zusammenfassung der Punkte zu einem thermischen Effekt sowie optionale weitere Nachverarbeitungsschritte, wird gemäß Block 460 die Bestimmung bzw. Vorhersage des gesamten Samples mitsamt Effektgrenzen erhalten.

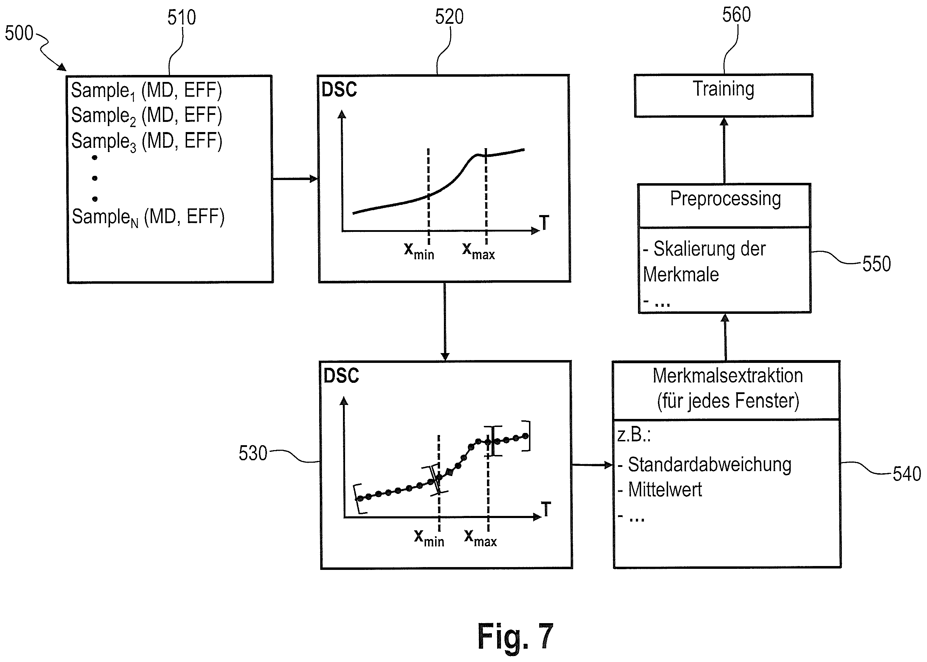

Fig. 7 illustriert einen zweiten beispielhaften Trainingsprozess für ein Künstliches-Intelligenz-Modul in einem Blockdiagramm 500 mit den Blöcken 510 bis 560. Der Trainingsprozess gemäß Fig. 7 kann als effektbasierter Ansatz oder effektbasierte Klassifikation verstanden bzw. bezeichnet werden. Anders als bei dem oben erwähnten punktbasierten Ansatz werden beim effektbasierten Ansatz die Schiebefenster nicht punktweise mit einer festen Fenstergröße über die Messkurve geschoben, sondern die Schiebefenster werden basierend auf den in der Messkurve vorkommenden Effekten gewählt. Ein Unterschied gegenüber dem punktbasierten Ansatz ist die Anzahl der Trainingsbeispiele, da die Anzahl der thermischen Effekte wesentlich geringer ist als die Anzahl der Messpunkte, die in einer Messkurve enthalten sind. In dem Beispiel gemäß Block 530 würden drei Trainingsstichproben erhalten werden, zwei ohne thermischen Effekt und eines mit thermischem Effekt, nämlich einem Glasübergang zwischen den Effektgrenzen xₘᵢₙ und xₘₐₓ.

In Block 510 wird über die Datenschnittstelle 210 der Vorrichtung 200 ein Trainings-Datensatz empfangen, der eine Anzahl N von Samples jeweils umfassend ein Messsignal MD der thermischen Analyse und wenigstens einen dem jeweiligen Messsignal MS zugeordneten thermischen Effekt EFF einer der thermischen Analyse zugrundeliegenden Probe umfasst. Das jeweilige Messsignal MD gibt eine auf einer Temperaturreihe basierende Messkurve an, wie sie in Block 520 dargestellt ist. Gemäß Block 530 und Block 540 werden aus den Schiebefenstern der Bereiche der thermischen Effekte bzw. der Bereiche ohne thermischen Effekt Merkmale extrahiert und die entsprechenden Labes zugeordnet. Bei dem Beispiel gemäß Fig. 7 würden den beiden äußeren Bereichen, d.h. den Bereichen außerhalb der Effektgrenzen xmin und xmax das Label "N" zugeordnet werden, da dort kein thermischer Effekt gegeben ist. Dem mittleren Bereich, d.h. dem Bereich innerhalb der Effektgrenzen xmin und xmax würde das Label "GT" zugeordnet werden, da es sich um einen Glasübergang handelt. Gemäß Block 550 können die extrahierten Merkmale vorverarbeitet, z.B. skaliert werden, z.B. durch Normalisierung, Standardisierung, oder dergleichen. Gemäß Block 560 ist die Verarbeitungslogik 220 dazu eingerichtet, Trainingsdaten basierend auf dem Trainings-Datensatz und dem jeweils zugeordneten Label zu generieren. Diese können dem Künstlichen-Intelligenz-Modul zugeführt werden.

Der effektbasierte Bestimmungsprozess bzw. Detektionsprozess wird für verschiedene Schiebefenstergrößen durchgeführt, da sich die Bereiche der thermischen Effekte in ihrer Länge teils signifikant unterscheiden. Durch die Detektion mit unterschiedlichen Schiebefenstergrößen, sind eine Vielzahl an Vorhersagen für den gleichen Effekt zu erwarten. Diese können im Weiteren zu einem gemeinsamen thermischen Effekt zusammenzuführt werden. Hierzu kann basierend auf den mit den unterschiedlichen Schiebefenstergrößen erzielten Vorhersagen, eine Zählung der Effektvorhersagen für die einzelnen Messpunkte durchgeführt werden. Anschließend kann mittels einer Mehrheitsentscheidung der zu detektierende thermische Effekttyp bestimmt werden.

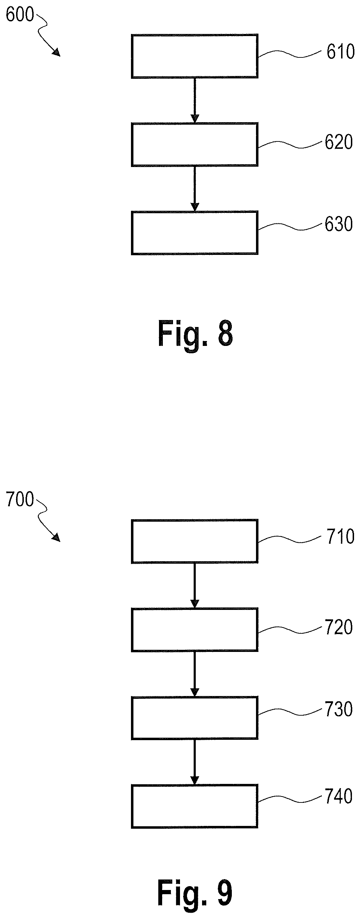

Fig. 8 illustriert in einem Flussdiagramm ein Verfahren 600 zum Auswerten eines Messsignals einer thermischen Analyse. Das Verfahren 600 kann beispielsweise mittels der Vorrichtung 100 ausgeführt werden.

Das Verfahren 600 umfasst ein Empfangen 610 des Messsignals der thermischen Analyse, wobei das Messsignal eine auf einer Temperaturreihe basierende Messkurve angibt. Zudem umfasst das Verfahren 600 ein Bestimmen 620 von einer Anzahl von Schiebefenstern basierend auf dem Messsignal, wobei jedes Schiebefenster einem entsprechenden Abschnitt der Messkurve mit einer Anzahl von Messpunkten zugeordnet ist. Des Weiteren umfasst das Verfahren 600 ein Bestimmen 630, durch ein zur Klassifikation eingerichtetes Künstliches-Intelligenz-Modul, ob für das jeweilige aus der Anzahl von Schiebefenstern ein thermischer Effekt einer der thermischen Analyse zugrundeliegenden Probe gegeben ist. Das Künstliche-Intelligenz Modul bestimmt dabei einen zusammenhängenden Abschnitt des thermischen Effekts bezogen auf die Messkurve.

Fig. 9 illustriert in einem Flussdiagramm ein Verfahren 700 zum Generieren von Trainingsdaten für ein Künstliches-Intelligenz-Modul. Das Verfahren 700 kann beispielsweise mittels der Vorrichtung 200 ausgeführt werden.

Das Verfahren 700 umfasst ein Empfangen 710 eines Trainings-Datensatzes, der eine Anzahl von Samples jeweils umfassend ein Messsignal einer thermischen Analyse und wenigstens einen dem jeweiligen Messsignal zugeordneten thermischen Effekt einer der thermischen Analyse zugrundeliegenden Probe aufweist, wobei das jeweilige Messsignal eine auf einer Temperaturreihe oder Zeitreihe basierende Messkurve angibt. Zudem umfasst das Verfahren 700 ein Anwenden 720 von einer Anzahl von Schiebefenstern auf die Anzahl von Samples. Des Weiteren umfasst das Verfahren 700 ein Zuordnen 730 eines Labels zu dem jeweiligen aus der Anzahl von Schiebefenstern, wobei das jeweilige Label den entsprechenden thermischen Effekt als einen zusammenhängenden Abschnitt des thermischen Effekts bezogen auf die jeweilige Messkurve angibt. Zudem umfasst das Verfahren 700 ein Generieren 740 von Trainingsdaten basierend auf dem Trainings-Datensatz und dem jeweils zugeordneten Label.

### Liste der Referenzzeichen

- 10: Anordnung zum Durchführen einer Thermoanalyse
- 12: Ofen
- 14: Heizeinrichtung
- 16: Probe
- 18: Referenz
- 20: Messschaltung
- 100: Vorrichtung
- 110: Datenschnittstelle
- 120: Verarbeitungslogik
- 200: Vorrichtung
- 210: Datenschnittstelle
- 220: Verarbeitungslogik
- 300: Blockdiagramm
- 310-360: Block / Prozessschritt
- 400: Blockdiagramm
- 410-460: Block / Prozessschritt
- 500: Blockdiagramm
- 510-560: Block / Prozessschritt
- 600: Verfahren
- 610-630: Verfahrensschritt
- 700: Verfahren
- 710-740: Verfahrensschritt

## Patentansprüche

1. Verfahren (600) zum Auswerten eines Messsignals einer thermischen Analyse, wobei das Verfahren umfasst:
Empfangen (610) des Messsignals der thermischen Analyse, wobei das Messsignal eine auf einer Temperaturreihe basierende Messkurve angibt, Bestimmen (620) von einer Anzahl von Schiebefenstern basierend auf dem Messsignal, wobei jedes Schiebefenster einem entsprechenden Abschnitt der Messkurve mit einer Anzahl von Messpunkten zugeordnet ist, und
Bestimmen (630), durch ein zur Klassifikation eingerichtetes Künstliches-Intelligenz-Modul, ob für das jeweilige aus der Anzahl von Schiebefenstern ein thermischer Effekt einer der thermischen Analyse zugrundeliegenden Probe gegeben ist, wobei das Künstliche-Intelligenz Modul einen zusammenhängenden Abschnitt des thermischen Effekts bezogen auf die Messkurve bestimmt.

2. Verfahren nach Anspruch 1, wobei der bestimmte Abschnitt des thermischen Effekts einem Produktionsplanungs- und/odersteuerungssystem und/oder einem Qualitätskontrollsystem zugeführt wird.

3. Verfahren nach Anspruch 1 oder 2, wobei der Abschnitt des thermischen Effekts mit einer unteren Effektgrenze und einer oberen Effektgrenze bezogen auf die Temperaturreihe bestimmt wird, und wobei die obere und untere Effektgrenze den Abschnitt des thermischen Effekts gegenüber einem anderen thermischen Effekt innerhalb der Messkurve oder einem Abschnitt der Messkurve ohne thermischen Effekt abgrenzen.

4. Verfahren nach einem der vorhergehenden Ansprüche, wobei das Bestimmen des thermischen Effekts durch das Künstliche-Intelligenz-Modul ferner umfasst:
Extrahieren von wenigstens einem jeweiligen Messpunkt aus der Anzahl von Schiebefenstern, und
Zuführen des wenigstens einen jeweiligen extrahierten Messpunkts der Anzahl von Schiebefenstern zu dem Künstliche-Intelligenz-Modul, wobei das Künstliche-Intelligenz-Modul für den jeweiligen extrahierten Messpunkt bestimmt, ob für diesen der thermische Effekt gegeben ist, und basierend auf der Bestimmung des thermischen Effekts für die jeweiligen extrahierten Messpunkte über die Anzahl von Schiebefenstern hinweg den Abschnitt des thermischen Effekts bestimmt.

5. Verfahren nach Anspruch 4, wobei der Abschnitt des thermischen Effekts basierend darauf bestimmt wird, ob für aneinander angrenzende extrahierte Messpunkte über die Anzahl von Schiebefenstern hinweg der jeweils gleiche thermische Effekt vorausgesagt wurde, und wobei die aneinander angrenzenden extrahierten Messpunkte mit gleichem thermischem Effekt zusammengefasst werden.

6. Verfahren nach Anspruch 4 oder 5, wobei das Bestimmen für den wenigstens einen jeweiligen extrahierten Messpunkt für einen Mittenbereich oder einen Mittelpunkt des jeweiligen Schiebefensters der Anzahl von Schiebefenstern durchgeführt wird.

7. Verfahren nach einem der vorhergehenden Ansprüche, wobei das Bestimmen, durch das Künstliche-Intelligenz-Modul, ob für das jeweilige aus der Anzahl von Schiebefenstern der thermische Effekt gegeben ist, für unterschiedliche Schiebefenstergrößen durchgeführt und basierend darauf, ob für unterschiedliche Schiebefenstergrößen der jeweils gleiche thermische Effekt bestimmt wurde, der Abschnitt des thermischen Effekts bestimmt wird.

8. Verfahren nach Anspruch 7, wobei die mit den unterschiedlichen Schiebefenstergrößen erhaltenen Bestimmungen für den jeweiligen Messpunkt gezählt und basierend auf der Zählung der Abschnitt des thermischen Effekts bestimmt wird.

9. Verfahren nach einem der vorhergehenden Ansprüche, wobei der thermische Effekt einem Glasübergang, einem Schmelzen oder einem Kristallisationsvorgang eines Materials einer Probe der thermischen Analyse zugeordnet ist.

10. Vorrichtung (100) zum Auswerten eines Messsignals einer thermischen Analyse, wobei die Vorrichtung aufweist:
eine Datenschnittstelle (110), die dazu eingerichtet ist, das Messsignal der thermischen Analyse zu empfangen, wobei das Messsignal eine auf einer Temperaturreihe basierende Messkurve angibt, und
eine Verarbeitungslogik (120), die dazu eingerichtet ist:
eine Anzahl von Schiebefenstern basierend auf dem Messsignal zu bestimmen, wobei jedes Schiebefenster einem entsprechenden Abschnitt der Messkurve mit einer Anzahl von Messpunkten zugeordnet ist, und durch ein von der Verarbeitungslogik ausgeführtes, zur Klassifikation eingerichtetes Künstliches-Intelligenz-Modul zu bestimmen, ob für das jeweilige aus der Anzahl von Schiebefenstern ein thermischer Effekt eines der thermischen Analyse zugrundeliegenden Proben-Materials gegeben ist, wobei das Künstliche-Intelligenz-Modul dazu eingerichtet ist, einen zusammenhängenden Abschnitt des thermischen Effekts bezogen auf die Messkurve zu bestimmen.

11. Vorrichtung nach Anspruch 10, wobei das Künstliche-Intelligenz-Modul zumindest eines von einer Support-Vektor-Maschine und einer Random Forest-Methode umfasst.

12. Verfahren (700) zum Generieren von Trainingsdaten für ein Künstliches-Intelligenz-Modul, das zum Auswerten eines Messsignals einer thermischen Analyse zu trainieren ist, wobei das Verfahren umfasst:
Empfangen (710) eines Trainings-Datensatzes, der eine Anzahl von Samples jeweils umfassend ein Messsignal einer thermischen Analyse und wenigstens einen dem jeweiligen Messsignal zugeordneten thermischen Effekt einer der thermischen Analyse zugrundeliegenden Probe aufweist, wobei das jeweilige Messsignal eine auf einer Temperaturreihe oder Zeitreihe basierende Messkurve angibt,
Anwenden (720) von einer Anzahl von Schiebefenstern auf die Anzahl von Samples,
Zuordnen (730) eines Labels zu dem jeweiligen aus der Anzahl von Schiebefenstern, wobei das jeweilige Label den entsprechenden thermischen Effekt als einen zusammenhängenden Abschnitt des thermischen Effekts bezogen auf die jeweilige Messkurve angibt, und Generieren (740) von Trainingsdaten basierend auf dem Trainings-Datensatz und dem jeweils zugeordneten Label.

13. Verfahren nach Anspruch 12, ferner umfassend:
Zuführen der generierten Trainingsdaten zu dem Künstlichen-Intelligenz-Modul.

14. Computerlesbares Medium, auf dem die gemäß dem Verfahren nach Anspruch 12 generierten Trainingsdaten gespeichert sind, oder Datenträgersignal, das die gemäß dem Verfahren nach Anspruch 12 oder 13 generierten Trainingsdaten überträgt.

15. Vorrichtung (200) zum Generieren von Trainingsdaten für ein Künstliches-Intelligenz-Modul, das zum Auswerten eines Messsignals einer thermischen Analyse zu trainieren ist, wobei die Vorrichtung (200) aufweist:
eine Datenschnittstelle (210), die dazu eingerichtet ist, einen Trainings-Datensatz zu empfangen, der eine Anzahl von Samples jeweils umfassend ein Messsignal einer thermischen Analyse und wenigstens einen dem jeweiligen Messsignal zugeordneten thermischen Effekt einer der thermischen Analyse zugrundeliegenden Probe, wobei das jeweilige Messsignal eine auf einer Temperaturreihe basierende Messkurve angibt, und
eine Verarbeitungslogik (220), die dazu eingerichtet ist:
eine Anzahl von Schiebefenstern auf die Anzahl von Samples anzuwenden,
ein Label zu dem jeweiligen aus der Anzahl von Schiebefenstern zuzuordnen, wobei das jeweilige Label den entsprechenden thermischen Effekt als einen zusammenhängenden Abschnitt des thermischen Effekts bezogen auf die jeweilige Messkurve angibt, und
Trainingsdaten basierend auf dem Trainings-Datensatz und dem jeweils zugeordneten Label zu generieren.

16. Vorrichtung nach Anspruch 15, wobei die Vorrichtung ferner dazu eingerichtet ist, die generierten Trainingsdaten für das Künstliche-Intelligenz-Modul bereitzustellen und/oder die generierten Trainingsdaten dem Künstlichen-Intelligenz-Modul zuzuführen.

17. Computerprogramm, umfassend Befehle, die bei der Ausführung des Computerprogramms durch einen Computer, diesen veranlassen, das Verfahren nach einem der Ansprüche 1 bis 9 und/oder das Verfahren nach Anspruch 12 oder 13 durchzuführen.

18. Computerlesbares Medium, umfassend Befehle, die bei der Ausführung durch einen Computer, diesen veranlassen, das Verfahren nach einem der Ansprüche 1 bis 9 und/oder das Verfahren nach Anspruch 12 oder 13 durchzuführen.
